# EUROPEAN PATENT APPLICATION

(11) **EP 4 667 364 A1**
(43) Date of publication of application: **24.12.2025**
(21) Application number: 25183966.8
(22) Date of filing: 19.06.2025
(51) Int. Cl.: B64G 1/10, B64G 1/58, B64G 1/62

(54) **CONTAINMENT ASSEMBLY OF A HEAT SHIELD OF AN AEROSPACE VEHICLE WITH DIRECTIONAL DECELERATOR FUNCTION DURING THE DESCENT PHASE**

(30) Priority: 21.06.2024 IT 202400014365
(71) Applicant: Space Factory SRL, 80146 Napoli (IT)
(72) Inventor: PUNZO, Francesco, 80146 NAPOLI (IT); SALZA, Norberto, 80146 NAPOLI (IT); FUSCO, Daniele, 80146 NAPOLI (IT)
(74) Representative: Studio Torta S.p.A.

(57) **Abstract**

A containment assembly (1) of a heat shield (2) of an aerospace vehicle comprising a front flange (4) and a rear flange (5) fixed respectively to a first (3a) and a second (3b) end of a CubeSat (3), a mobile flange (6) connected by means of elastic means (10) to the rear flange (5) on the opposite side with respect to the CubeSat (3), a release device (11) suitable for releasing the compression of the elastic means (10), a plurality of containment panels (7) connected by means of respective hinges (8) and at a lower edge (7a) to the mobile flange (6), a plurality of photovoltaic elements (13) fixed to an external surface (7c) of at least part of the containment panels (7). The plurality of containment panels (7) is suitable for being arranged (a) in a closed configuration, to conjointly create a containment wall of a head shield (2), and (b) in an open configuration, in which the containment panels (7) are arranged radially.

## Description

### CROSS-REFERENCE TO RELATED APPLICATIONS

This patent application claims priority from Italian patent application no. 102024000014365 filed on June 21, 2024, the entire disclosure of which is incorporated herein by reference.

### TECHNICAL FIELD

The present invention relates to a containment assembly of a heat shield of an aerospace vehicle.

The containment assembly of the present invention not only forces the heat shield into a confined area until it is opened but also performs further important functions relating to the management of said aerospace vehicle, such as supplying electric power and managing trim in the descent phase.

In particular, the containment assembly of the present invention finds a preferred application for aerospace vehicles employed in missions of a duration that is longer than what is manageable in terms of power by the onboard batteries alone.

### STATE OF THE ART

In the field of aerospace, vehicles, such as aerospace capsules, are equipped with a deployable device, which in the phase of positioning in orbit or launching into space is maintained in its folded shape, and which is subsequently brought into its deployed shape to be able to fulfil its function. In particular, in cases where this deployable device is a heat shield, its function is to protect the vehicle from so-called "aerodynamic heating", which occurs during the vehicle re-entry phase due to the transfer of heat produced by friction with the gases of the atmosphere surrounding said vehicle. Another function performed by the deployable heat shield is that of accelerating the re-entry of the aerospace vehicle by increasing the resistance with the atmosphere in line with ESA Clean Space requirements. Specialists in the field are well aware that the number of satellites circling the Earth on orbits between 500 and 1000 km (LEO - Low Earth Orbit) is constantly growing and, in order to avoid orbital saturation, there is a need to provide solutions that facilitate the re-entry of satellites once their mission is over.

As it will be evident to a person skilled in the art, in an aerospace vehicle there is a need to make the deployable device in its folded shape as compact and as light as possible. The space available in aerospace vehicles is in fact limited while, in addition, the transportable weight is also a particularly important factor that must be taken into account.

Another particularly pressing need in the field of aerospace vehicles concerns the necessity of being able to ensure that the aerospace vehicle is supplied with the electric power required for the performance of its functions. For aerospace missions, it is necessary that the aerospace vehicle should comprise a device capable of producing energy.

Photovoltaic devices have been the devices used for producing energy for aerospace missions for some time now.

In this respect, it must be considered that the electrical power required by an aerospace vehicle must be sufficient to be able to guarantee both the operation of the onboard instruments and of the payloads in general (for example, mini-labs for experiments in microgravity) and the recharging of the batteries that are subsequently usable during eclipse periods.

There is also a need to design the photovoltaic devices to take up as little space as possible.

In addition, as is known, when an aerospace vehicle is in a phase of re-entry into the Earth's atmosphere, it must necessarily deal with complex rotations indicated in the field as yaw, roll and pitch.

As it will be evident to a person skilled in the art, such rotations can cause the aerospace vehicle to move away from the intended landing area. In this regard, aerospace vehicles have long been equipped with devices capable of managing such rotations and, as a result, maintaining a stable trim of said vehicle in order to be able to head towards the intended landing area in the final phase of re-entry into the atmosphere.

Obviously, space and weight requirements necessarily apply to this type of device as well.

There has thus been a need to provide a solution that ensures an effective handling of the complex rotations to which the aerospace vehicle is subjected in the final phase of re-entry into the atmosphere, without thereby compromising the compactness and weight of said aerospace vehicle as a whole.

The inventors of the present invention have provided a containment assembly of the heat shield, the technical characteristics of which are capable of meeting not only the need for a confinement of the space shield in its folded shape in a small volume, but also the need to provide devices for the production of power and the management of trim in the re-entry phase with a weight and dimensions that are as small as possible.

### DESCRIPTION OF THE INVENTION

The object of the present invention is an aerospace vehicle comprising a heat shield and a containment assembly of said heat shield; said containment assembly comprising a front flange and a rear flange fixed respectively to a first and a second end of an aerospace vehicle, a mobile flange connected by means of elastic means to said rear flange on the opposite side with respect to said aerospace vehicle, a release device suitable for releasing the compression of said elastic means, a plurality of containment panels connected by means of respective hinges to said mobile flange, a plurality of photovoltaic elements fixed to an external surface of at least part of said containment panels; each of said hinges is fixed to a lower edge of a respective containment panel and is suitable for rotating the same around a first rotation axis; said plurality of containment panels being suitable for being arranged (a) in a closed configuration, to conjointly create a containment wall of a heat shield, and (b) in an open configuration, in which the containment panels are arranged radially after having rotated around said first rotation axis.

Here and in the following, references such as front and rear refer to the aerospace vehicle in its position of forward motion, while references such as upper and lower refer to the assembly as illustrated in the accompanying figures; said elastic means being in a compressed condition in said closed configuration and said elastic means being in an extended condition in said extended configuration.

Preferably, said front flange comprises an edge constraint suitable for cooperating with an upper edge of each of said containment panels to maintain said closed configuration.

Preferably, each of said hinges comprises one or more torsional springs to automatically bring a respective panel from a closed position to an open position.

Preferably, a rotation system for rotating a respective containment panel around a second rotation axis is applied to each of said hinges.

Preferably, said first rotation axis is perpendicular to said second rotation axis.

Preferably, said second rotation axis is a median longitudinal axis of a containment panel.

Preferably, this rotation system comprises a stepper motor.

Preferably, each of said containment panels has an arcuate cross section to form a cylindrical containment wall in said closed position.

Preferably, said elastic means comprise compression springs.

Preferably, on an edge portion of said front flange there is a perimeter groove suitable for locking the upper edges of said containment panels in said closed position.

### BRIEF DESCRIPTION OF THE DRAWINGS

An example of the present invention is described in the following, as an illustrative and non-limiting example, with reference to the accompanying figures, wherein:
- Figure 1 illustrates the assembly of the present invention in a closed configuration of the same;
- Figure 2 illustrates the assembly of Figure 1 in an open configuration of the same;
- Figure 3 is a section along the line III-III of Figure 1;
- Figure 4 schematically illustrates a rotation assembly for rotating the containment assembly of Figure **1****.**

### PREFERRED EMBODIMENT OF THE INVENTION

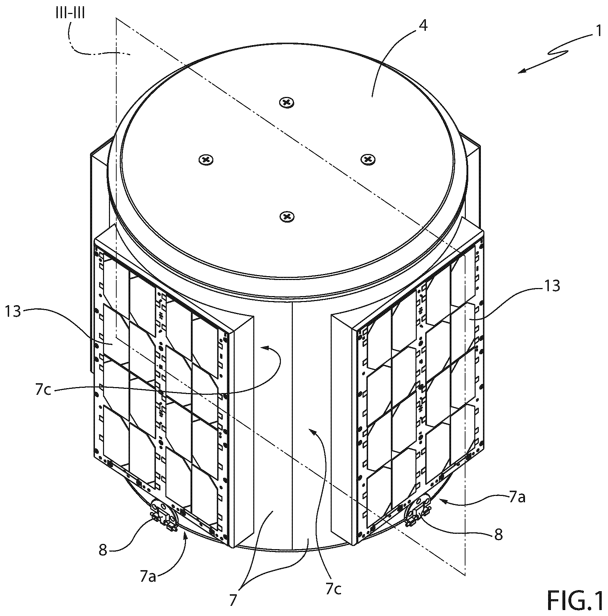

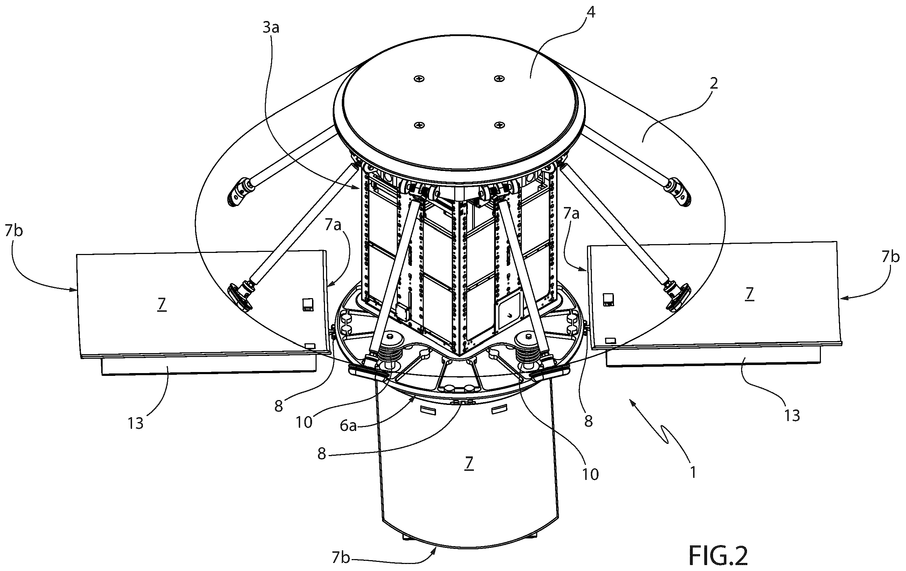

In Figures 1 and 2, reference number 1 indicates, as a whole, a containment assembly 1 according to the present invention.

The function of the containment assembly 1 is to maintain in folded shape (Figure 1) a heat shield 2 applied to a CubeSat 3 and to let it deploy (Figure 2) when necessary (re-entry phase of the mission).

The heat shield 2 is located within the containment assembly 1 in its compressed form in such a manner that its deployment occurs automatically once the containment assembly 1 switches from its closed configuration (Figure 1) to its open configuration (Figure 2). That is to say that the deployment of the heat shield 2 occurs automatically once the containment assembly releases the heat shield 2 from spatial constriction.

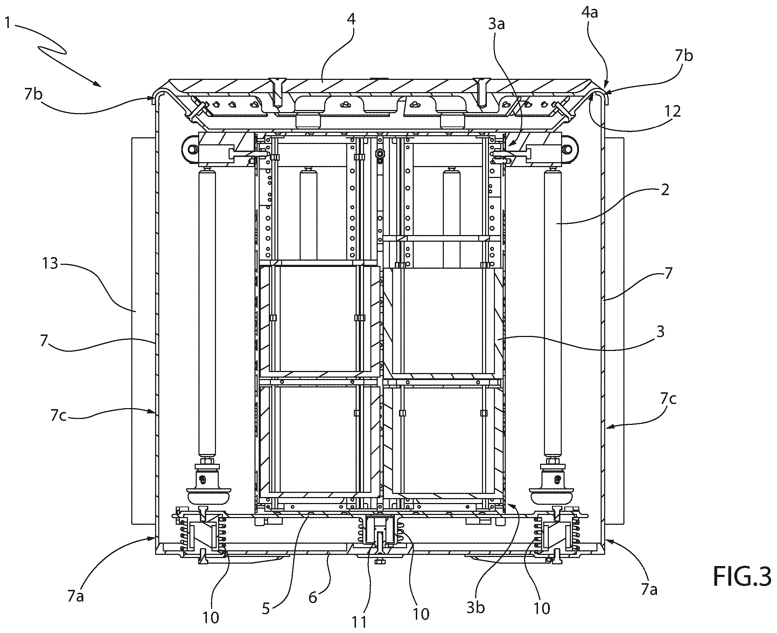

Considering also the illustration shown in Figure 3, the containment assembly 1 comprises a front flange 4 fixed in a stable manner to an upper end 3a of the CubeSat 3, a rear flange 5 fixed in a stable manner to a lower end 3b of the CubeSat 3, a mobile flange 6 connected in a movable manner to the rear flange 5, and a plurality of containment panels 7 fixed by means of respective hinges 8 to an edge 6a of the mobile flange 6.

In particular, the position of the rear flange 5 in relation to the mobile flange 6 is extremely relevant in the operation of the containment assembly as a whole.

One of the elements that connects the mobile flange 6 to the rear flange 5 consists of a plurality of springs 10. The action of the springs 10 causes the mobile flange 6 to move away from the rear flange 5 and is controlled by the action of a release device 11 illustrated in an extremely schematic manner.

The function of the release device 11 is, thus, to command a change in the distance between the rear flange 5 and the mobile flange 6 from a close position (Figure 1) to a distant position (Figure 2) and, accordingly, to move the assembly as a whole from a closed configuration (Figure 1) to an open configuration (Figure 2).

In particular, in the condition of the close position between the rear flange 5 and the mobile flange 6, the springs 10 are compressed (loaded), while in the condition of the distant position between the rear flange 5 and the mobile flange 6, the springs 10 are extended (unloaded). In other words, once the release device 11 releases the constraint that maintains the close position between the rear flange 5 and the mobile flange 6, the springs 10 exert a thrust that causes the mobile flange 6 to move away from the rear flange 5 and the containment panels 7 to open, as described in the following.

The containment panels 7 are connected to the mobile flange 6 by means of respective hinges 8 fixed to the lower edges 7a of the containment panels 7.

Each of the hinges 8 comprises one or more torsional springs, known and not illustrated for simplicity, which are suitable for moving the respective panel from a closed position (Figure 1) to an open position (Figure 2).

As clearly illustrated in Figure 3, close to an edge 4a of the front flange 4 there is a circular perimeter groove 12, which serves as a constraint in order to lock the associated containment panel 7 in its closed position and to prevent the containment panels 7 from conjointly opening radially under the action of the torsional springs of the hinges 8.

The constraining action occurs when an upper edge 7b of a respective containment panel 7 engages the groove 12. The containment panel 7 is thereby prevented from opening precisely because the engagement with the groove 12 prevents its outward movement which, however, is forced by the torsional springs of the hinges 8.

When the release device 11 is activated, the lock that maintains the mobile flange 6 in a position close to the rear flange 5 is released. At this point, the mobile flange 6 is subjected to the action of the springs 10 and separates from the rear flange 5, bringing with it the containment panels 7 to which it is attached.

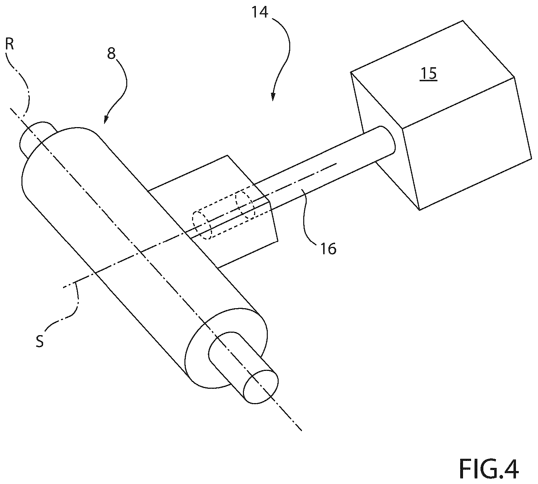

The movement of the containment panels 7 releases the constraint that their upper edge 7b has with the groove 12. Once the constraint is removed, said panels open radially under the action of the torsional springs of the hinges 8, which impose the rotation around an axis R as illustrated in Figure 4.

In other words, since both the rear flange 5 and the front flange 4 are fixed to the structure of the CubeSat 3, the mobile flange 6, once released, also moves away from the front flange 4 and, as it brings with it the containment panels 7 to which it is connected by means of the hinges 8, causes the upper edge 7b of said containment panels 7 to leave the groove 12 so that the constraint produced by the same is removed.

The containment assembly 1 comprises a plurality of solar panels 13, each of which is fixed to an external surface 7c of a respective containment panel 7.

Thus, it is evident from the foregoing that the solar panels do not occupy additional space inside the aerospace vehicle, as they use the surface area of operational elements already provided such as containment panels 7.

Figure 4 schematically illustrates a hinge 8 which, as described above, is responsible for the rotation of the containment panel to which it is fixed from an open position to a closed position by rotating about a rotation axis R. A rotary device 14 is applied to the hinge 8, the rotary device 14 comprising a stepper motor 15 and a rotation shaft 16 which is driven by the stepper motor 15 so as to rotate about the axis S and which engages the hinge 8 in an integral manner so as to impose the rotation about said axis S.

As illustrated in Figure 4, the axis S is perpendicular to the axis R.

The movements of the hinge 8 around the axis S also cause the rotation of the containment panel 7 about the axis S, which constitutes the longitudinal median axis of the containment panel 7.

The rotation of the containment panels 7 about their median longitudinal axis S makes it possible to manage rotations and, as a result, to maintain the trim of the vehicle stable so as to be able to arrive at the intended landing area.

From the foregoing description it is apparent that it is possible with the present invention to meet, in a single device, space and weight requirements pertaining to the need to maintain the heat shield in a folded configuration, to provide a power production on board and to ensure the management of the trim during the re-entry phase.

In particular, the present invention provides a system for opening the heat shield that is extremely safe and efficient and that simultaneously makes it possible to also provide the production of power and the management of the trim during the re-entry phase.

## Claims

1. Aerospace vehicle (3) comprising a heat shield (2) and a containment assembly (1) of said heat shield (2); said containment assembly (1) comprising a front flange (4) and a rear flange (5) fixed respectively to a first (3a) and a second (3b) end of an aerospace vehicle (3), a mobile flange (6) connected by means of elastic means (10) to said rear flange (5) on the opposite side with respect to said aerospace vehicle (3), a release device (11) suitable for releasing the compression of said elastic means (10), a plurality of containment panels (7) connected by means of respective hinges (8) to said mobile flange (6), a plurality of photovoltaic elements (13) fixed to an external surface (7c) of at least part of said containment panels (7); each of said hinges (8) is fixed to a lower edge (7a) of a respective containment panel (7) and is suitable for rotating the same around a first rotation axis (R); said plurality of containment panels (7) being suitable for being arranged (a) in a closed configuration, to conjointly create a containment wall of a heat shield (2), and (b) in an open configuration, in which the containment panels (7) are arranged radially after having rotated around said first rotation axis (R).

2. Aerospace vehicle according to claim 1, **characterized in that** said front flange (4) comprises an edge (4a) constraint suitable for cooperating with an upper edge (7b) of each of said containment panels (7) to maintain said closed configuration.

3. Aerospace vehicle according to claim 1 or 2, **characterized in that** each of said hinges (8) comprises one or more torsional springs to automatically bring a respective containment panel (7) from a closed position to an open position.

4. Aerospace vehicle according to one of the previous claims, **characterized in that** a rotation system (14) for rotating a respective containment panel (7) around a second rotation axis (S) is applied to each of said hinges (8).

5. Aerospace vehicle according to claim 4, **characterized in that** said first rotation axis (R) is perpendicular to said second rotation axis (S).

6. Aerospace vehicle according to claim 4 or 5, **characterized in that** said second rotation axis (S) is a median longitudinal axis of a containment panel (7).

7. Aerospace vehicle according to claim 4, **characterized in that** said rotation system (14) comprises a stepper motor (15)

8. Aerospace vehicle according to one of the previous claims, **characterized in that** each of said containment panels (7) has an arcuate cross section to form a cylindrical containment wall in said closed position.

9. Aerospace vehicle according to one of the previous claims, **characterized in that** said elastic means comprise compression springs (10).

10. Aerospace vehicle according to one of the previous claims, **characterized in that** on an edge portion (4a) of said front flange there is a perimeter groove (12) suitable for locking the upper edges (7b) of said containment panels (7) in said closed position.

11. Aerospace vehicle according to one of the previous claims, **characterized in that** said aerospace vehicle is a CubeSat (3).
